# FASCICULE DE BREVET EUROPEEN

(11) **EP 3 694 146 B1**
(45) Date de publication et mention de la délivrance du brevet: **18.08.2021**
(21) Numéro de dépôt: 20156230.3
(22) Date de dépôt: 07.02.2020
(51) Int. Cl.: H04L 12/18

(54) **PROCÉDÉ DE TRAITEMENT DE FLUX AUDIOVIDÉO EN CONFÉRENCE MULTIPARTITE, DISPOSITIFS, SYSTÈME ET PROGRAMME CORRESPONDANTS**
VERARBEITUNGSVERFAHREN EINES AUDIOVIDEO-DATENSTROMS IN KONFERENZSCHALTUNG MIT MEHREREN PARTEIEN, ENTSPRECHENDE VORRICHTUNGEN, ENTSPRECHENDES SYSTEM UND PROGRAMM
METHOD FOR PROCESSING AUDIO AND VIDEO STREAM IN MULTI-PARTY CONFERENCE, CORRESPONDING DEVICES, SYSTEM AND PROGRAM

(30) Priorité: 07.02.2019 FR 1901218
(43) Date de publication de la demande: 12.08.2020
(73) Titulaire: Apizee, 22300 Lannion (FR)
(72) Inventeur: L'HOSTIS, Michel, 22310 Plestin les Grèves (FR)
(74) Mandataire: Vidon Brevets & Stratégie

(56) Documents cités:
- EP-A1- 2 770 667
- US-A1- 2018 375 907

## Description

### 1. Domaine

L'invention se rapporte au traitement de flux de données de conférence. Plus particulièrement, l'invention se rapport au traitement de flux de données de conférences audio/vidéo dans un système de visioconférence ou d'audioconférence. Plus spécifiquement, l'invention se rapporte à la mise en œuvre de flux de données de conférences audio/vidéo dans le cadre d'une conférence de type WebRTC.

### 2. Art Antérieur

Les dernières décennies ont vu se généraliser les systèmes de vidéoconférence également appelés visioconférence. On appelle visioconférence une mise en œuvre combinée de deux types de techniques : une transmission de son et d'image, dite visiophonie, permettant de voir et dialoguer avec son interlocuteur et une technique de conférence multipoints, permettant d'effectuer une réunion avec plus de deux terminaux. De tels systèmes de visioconférence connaissent un engouement certain depuis plusieurs années en permettant la tenue de réunions entre des interlocuteurs souvent très éloignés géographiquement. Ces solutions sont particulièrement populaires en entreprise où elles permettent des économies tant financières que temporelles. Ces solutions sont également de plus en plus utilisées dans l'enseignement à distance.

Au-delà du principe de réunion de plusieurs interlocuteurs sous forme audio et visuelle dans un même environnement, les techniques de mise en œuvre de ces systèmes sont très disparates. Par exemple le constructeur Polycom® propose des terminaux destinés à être connectés à des infrastructures publiques ou privées et qui implémentent des protocoles standardisés pour la transmission de flux (H239, H323, etc.). Bien qu'implémentant des standards de transmission, les solutions à base de terminaux physiques propriétaires tels que Polycom® ne sont pas nécessairement ouvertes sur d'autres matériels. Par ailleurs, l'achat des matériels nécessaires est un frein souvent évoqué. Ainsi, les systèmes de conférence web sont généralement plus populaires. Leur avantage majeur est qu'ils ne nécessitent pas l'achat de matériels dédiés. Les participants se connectent sur un serveur web dédié (qui requiert l'installation d'une application permettant de participer à la conférence). WebEx® est actuellement une des solutions de webinar les plus connues.

L'un des problèmes des systèmes de conférences web était la nécessité d'installer une application (un client ou un plugin) pour pouvoir participer à une conférence. Or ce type d'obligation est de plus en plus mal perçu, principalement par les DSI (Directions de Systèmes d'Information) des entreprises qui y voient généralement une menace potentielle ajoutée aux menaces qui pèsent déjà sur l'infrastructure de système. Ainsi, des solutions qui ne nécessitent pas d'installation sur les terminaux de communication des utilisateurs ont vu le jour. Elles sont par exemple basées sur le framework (cadre de développement) WebRTC. WebRTC est un framework ouvert pour le Web qui permet de réaliser des communications en temps réel dans le navigateur. Il comprend les composants de base pour l'implémentation de telles communications tels que les composants réseaux, audios et vidéos utilisés dans les applications de conversation vocale et vidéo. Ces composants, lorsqu'ils sont implémentés dans un navigateur, sont accessibles via une API JavaScript, permettant aux développeurs d'implémenter facilement leur propre application WebRTC.

Ainsi, d'une manière générale, les systèmes de visioconférence sans installation tendent à prendre le pas sur les systèmes qui nécessitent soit l'achat de matériels couteux soit l'installation de clients ou de plugins dédiés sur les terminaux de communications des utilisateurs. En revanche, l'une des problématiques à laquelle les systèmes de visioconférence sont confrontés est l'absence, la réduction ou la pénurie de ressources de transmission disponibles. Plus particulièrement la bande passante disponible (i.e. la quantité d'information qu'un terminal ou un serveur peut transmettre ou recevoir à un instant donné) est un facteur limitatif de la mise en œuvre de visioconférence. En effet, la baisse de la bande passante disponible a des conséquences néfastes sur la transmission et la réception des données en provenance des différentes sources, entrainant la formation d'artefacts d'affichage et/ou de problèmes de décodage audio. Pour le WebRTC par exemple, deux modes de communication entre les différents dispositifs peuvent être mis en œuvre, ces deux modes étant exclusifs et figés lors de la mise en œuvre de la conférence. Le premier mode est appelé P2P (« Peer-to-Peer » de l'anglais pour « Pair-à-Pair ») et consiste en une transmission/réception de flux entre tous les terminaux participants. Dans ce mode, chaque terminal transmet à tous les autres ses propres flux audio/video (ceux générés par le micro et la caméra qu'il utilise) et reçoit ces mêmes types de flux individuellement de la part des autres terminaux. Le problème est que le traitement de l'ensemble de ces flux d'une part nécessite des ressources importantes au niveau de client (processeur puissant et mémoire abondante) et d'autre part se heurte à la bande passante disponible. Le deuxième mode est appelé SFU (« Selective Forwarding Unit » de l'anglais « unité de transmission sélective »). Dans ce mode, le terminal de communication d'un utilisateur communique essentiellement avec un serveur en charge de la réception et de la transmission des flux des clients. Il s'agit donc d'une unité centralisée qui gère l'établissement des communications et la transmission des flux vers les terminaux de communication. L'avantage est qu'en fonction de la mise en œuvre retenue, le serveur SFU transmet tous les flux qu'il reçoit à un terminal de communication donné (comme par exemple la fusion de tous les flux reçus des autres terminaux). Il peut également transmettre plus d'un seul flux, en fonction du nombre de participants à la visioconférence. Un serveur SFU reçoit le flux de chaque participant et les diffuse à tous les autres. Avec un SFU, le navigateur publie un seul flux quel que soit le nombre de participants. Un MCU peut multiplexer les flux. Un SFU ne le fait pas. Quoi qu'il en soit, le nombre de flux (publiés) émis par le terminal est décorrélé du nombre de terminaux de communication participant à la visioconférence, à la différence du nombre de flux gérés par le serveur qui est fixe et dépend du nombre de terminaux. Les désavantages de ces deux modes de transmission se rapportent à leur exclusivité et à leur caractère relativement figé. Tandis que le mode P2P s'agrémente bien d'un nombre de participants réduit, et le mode SFU d'un nombre de participants élevé, il n'est actuellement pas possible de passer de l'un à l'autre de ces modes lors d'une visioconférence. En d'autres termes, déterminer les critères pour basculer entre le mode P2P et le mode SFU reste compliqué. Changer de mode revient à libérer les flux audio/vidéo et établir de nouveaux flux avec des points terminaux différents. Cela génère des coupures et un effet déceptif pour les utilisateurs. US 2018/375907 A1 décrit un exemple de visioconférence de l'art antérieur.

### 3. Résumé

La méthode proposée par les inventeurs ne pose pas ces problèmes de l'art antérieur. En effet, il est proposé une méthode de contrôle d'une conférence de type visioconférence ou audioconférence, selon la revendication 1, méthode mise en œuvre après la création d'une conférence à laquelle participe un ensemble d'au moins deux terminaux de communication, lesquels émettent chacun au moins un flux en provenance d'un périphérique de création de flux.

Selon l'invention, le procédé est mis en œuvre par un dispositif électronique de contrôle et le procédé comprend au moins une itération des actions suivantes :
- obtention, en provenance d'un terminal de communication, d'au moins une donnée représentative d'un déroulement de conférence, dite donnée de signalisation ;
- comparaison ladite au moins une donnée de signalisation reçue avec au moins un paramètre correspondant à ladite donnée de signalisation ;
- lorsque ladite au moins une donnée de signalisation reçue diffère dudit au moins un paramètre correspondant d'une valeur prédéterminée, mise en œuvre d'une phase de contrôle de la conférence.

Ainsi, à la différence des techniques antérieures, la méthode proposée permet de passer d'un mode de conférence à l'autre d'une manière simple et automatique, sans effet déceptif pour les utilisateurs.

La phase de contrôle de la conférence comprend :
- une phase de basculement de mode de communication des terminaux de communication, pouvant comprendre le basculement d'un mode de conférence en mode pair à pair vers un mode de conférence centralisé et vice-versa ; et/ou
- une phase de dimensionnement du nombre de flux de la conférence.

Ainsi, l'invention permet de gérer les ressources nécessaires à la visio conférence de manière simple et efficace.

Selon un mode de réalisation particulier, la phase de basculement de mode de communication des terminaux de communication d'un mode de conférence en mode pair à pair vers un mode de conférence centralisé comprend :
- une transmission d'une requête de création d'une conférence centralisée à un dispositif SFU ; et
pour chaque terminal de communication appartenant à l'ensemble des terminaux de communication :
- une transmission, au terminal, d'une requête de commutation de conférence, comprenant une donnée de passage en mode centralisé ;
- une transmission, au terminal, d'une requête de réémission d'un flux ;
- une réception, en provenance du terminal, d'une requête de publication de flux comprenant au moins un identifiant de flux et un identifiant de terminal de communication ;
- une transmission, au dispositif SFU, d'une requête de publication de flux dudit terminal ;
- réception, en provenance du dispositif SFU, d'une confirmation de publication dudit terminal ;
- une transmission, au terminal, d'une confirmation de publication auprès du dispositif SFU ;
- une transmission, aux autres terminaux de communication dudit ensemble des terminaux de communication, d'une notification de disponibilité dudit nouveau flux.

Ainsi, l'invention permet de centraliser les flux de manière simple.

Selon un mode de réalisation particulier, la phase de basculement de mode de communication des terminaux de communication d'un mode de conférence en mode pair à pair vers un mode de conférence centralisé comprend en outre pour chaque terminal de communication appartenant à l'ensemble des terminaux de communication :
- une réception, en provenance du terminal, d'une requête d'abonnement à un nouveau flux émis à la suite de la commutation par un autre terminal de communication dudit ensemble des terminaux de communication;
- une transmission, au dispositif SFU, d'une requête d'abonnement de flux dudit terminal ;
- une réception, en provenance du dispositif SFU, d'une confirmation d'abonnement dudit terminal au flux ;
- une transmission, au terminal, d'une confirmation d'abonnement auprès du dispositif SFU ;

Ainsi, l'invention permet de gérer les ressources de conférence de manière efficace en évitant une consommation inutile de ressources lorsque le nombre de terminaux ne le justifie pas.

Selon une caractéristique particulière, la phase de basculement de mode de communication des terminaux de communication d'un mode de conférence centralisé vers un mode de conférence en mode pair à pair comprend :
- une transmission d'une requête de suppression d'une conférence centralisée à un dispositif SFU ; et
pour chaque terminal de communication appartenant à l'ensemble des terminaux de communication :
- une transmission, au terminal, d'une requête de commutation de conférence, comprenant une donnée de passage en mode pair à pair ;
- une transmission, au terminal, d'une requête de déclaration d'un flux ;
- une réception, en provenance du terminal, d'une requête de déclaration de flux comprenant au moins un identifiant de flux et un identifiant de terminal de communication ;
- une transmission, aux autres terminaux de communication dudit ensemble des terminaux de communication, d'une notification de disponibilité dudit nouveau flux.

Selon un mode de réalisation particulier, la phase de basculement de mode de communication des terminaux de communication d'un mode de conférence centralisé vers un mode de conférence en mode pair à pair comprend pour chaque terminal de communication appartenant à l'ensemble des terminaux de communication :
- une réception, en provenance du terminal de communication, d'une requête d'abonnement à un nouveau flux émis à la suite de la commutation par un premier terminal de communication dudit ensemble des terminaux de communication ;
- une transmission, au premier terminal de communication, d'une requête d'abonnement indiquant l'abonnement du terminal de communication ;
- une réception, en provenance du premier terminal de communication, d'une confirmation d'abonnement dudit terminal au flux ;
- une transmission, au terminal, d'une confirmation d'abonnement auprès du premier terminal de communication ;

Selon une caractéristique particulière, la phase de dimensionnement du nombre de flux de la conférence comprend les étapes suivantes :
- obtention d'une donnée représentative d'une absence d'activité d'un utilisateur d'un terminal de communication appartenant à l'ensemble des terminaux de communication ;
- transmission, aux autres terminaux de à l'ensemble des terminaux de communication, d'une donnée représentative de l'absence d'activité de l'utilisateur terminal de communication ;
- suppression d'au moins un flux dudit terminal de communication.

Ainsi, outre les aspects précédemment évoqués, l'invention permet de réduire de manière importante la consommation de ressource, en évitant la transmission de flux lorsque cela n'est pas nécessaire, par exemple lorsqu'un utilisateur est passif dans la conférence.

Dans un autre mode de réalisation, l'invention se rapporte également à un dispositif électronique de contrôle d'une conférence de type visioconférence ou audioconférence, selon la revendication 7, dispositif contrôle mis en œuvre après la création de la conférence à laquelle participe un ensemble d'au moins deux terminaux de communication, lesquels émettent chacun au moins un flux en provenance d'un périphérique de création de flux. Selon l'invention, un tel dispositif met en œuvre itérativement les moyens suivants :
- obtention, en provenance d'un terminal de communication, d'au moins une donnée représentative d'un déroulement de conférence, dite donnée de signalisation ;
- comparaison ladite au moins une donnée de signalisation reçue avec au moins un paramètre correspondant à ladite donnée de signalisation ;
- lorsque ladite au moins une donnée de signalisation reçue diffère dudit au moins un paramètre correspondant d'une valeur prédéterminée, mise en œuvre de moyens de contrôle de la conférence qui comprennent des moyens de basculement de mode de communication des terminaux de communication, pouvant comprendre le basculement d'un mode de conférence en mode pair à pair vers un mode de conférence centralisé et vice-versa, et des moyens de dimensionnement du nombre de flux de la conférence.

Dans un autre mode de réalisation, l'invention se rapporte également à un système de contrôle d'une conférence de type visioconférence ou audioconférence. Selon l'invention, un tel système comprend :
- au moins deux terminaux de communication, lesquels sont aptes à émettre chacun au moins un flux en provenance d'un périphérique de création de flux ;
- au moins un dispositif SFU de centralisation de flux ;
- au moins un dispositif de contrôle tel que décrit précédemment ;
- au moins un serveur de gestion de conférence.

Selon une implémentation préférée, les différentes étapes des procédés selon l'invention sont mises en œuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile (carte mémoire) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de l'invention.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- La figure 1 décrit les principales étapes du procédé de contrôle de flux audio/video lors d'une conférence ;
- La figure 2 décrit la création d'une conférence en mode pair à pair ;
- La figure 3 illustre le basculement d'une conférence en mode pair à pair vers une conférence centralisée ;
- La figure 4 illustre le basculement d'une conférence en mode centralisée vers une conférence en mode pair à pair ;
- La figure 5 illustre schématiquement un dispositif de contrôle selon la présente technique.

### 5. Exposé

### 5.1. Rappels des principes

Comme exposé précédemment, afin de permettre une réduction de la quantité de données transmises dans le cadre du traitement de flux audio et/ou vidéo lors d'une conférence (visioconférence ou audioconférence) il est proposé d'une part de permettre un changement de mode de communication entre les dispositifs de communication participant à la conférence et d'autre part de limiter la quantité de données à transmettre. Pour mettre en œuvre la technique proposée, on se base sur un nouveau dispositif de contrôle (i.e. dispositif de type serveur de contrôle) qui effectue un diagnostic continue des conditions de déroulement de la conférence et ajuste les paramètres de celle-ci, en temps réel, en fonction des conditions de déroulement.

Le dispositif de contrôle prend généralement la forme d'un serveur (matériel et/ou logiciel) qui met en œuvre d'une part les fonctions de surveillance de conférence, notamment par l'utilisation d'une signalisation de conférence utilisée pour transmettre et recevoir des données, paramètres, valeurs en provenance des terminaux de communication qui participent à la conférence et d'autre part de modification de mode de conférence, selon la présente technique, en fonction de la surveillance exercée sur le déroulement technique (échange des données de signalisation, information en provenance de l'architecture réseau, etc.) des conférences.

Le dispositif de contrôle est ainsi en charge de :
- créer les conférences ;
- basculer d'un mode de conférence à un autre en cours de conférence (P2P/SFU) ;
- ajuster les paramètres et valeurs idoines (suppression de flux, restitution de flux, limitations) en fonction du déroulement de la conférence (comme par exemple l'adjonction ou la suppression de terminaux de communication, la modification d'un ou de plusieurs flux, etc.).

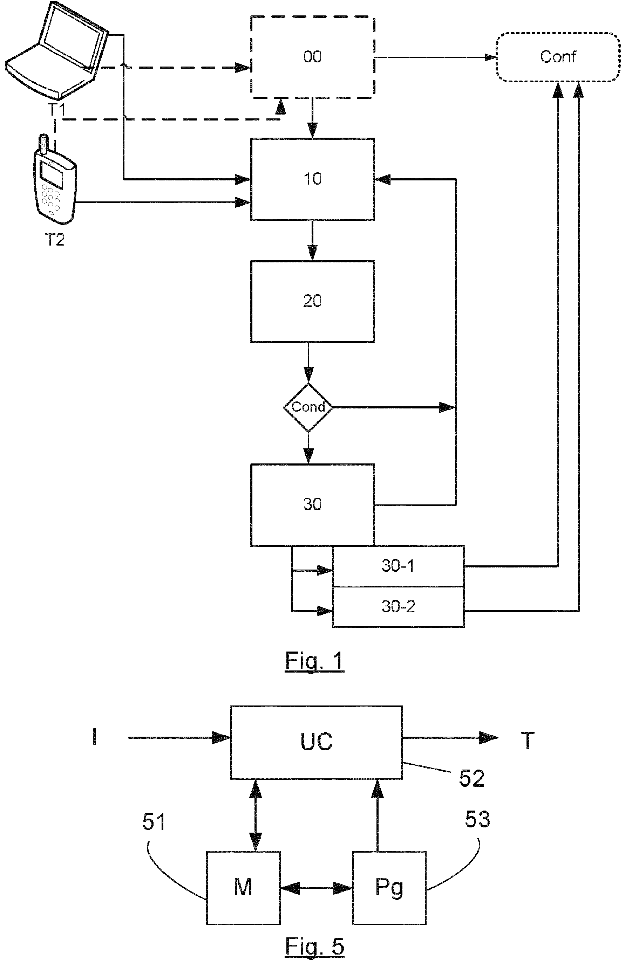

La figure 1 décrit les principales étapes du procédé de contrôle de flux audio/vidéo lors d'une conférence. Plus particulièrement, en relation avec la figure 1, deux modes de conférence sont disponibles : un mode P2P et un mode SFU, comme décrit précédemment. Le dispositif de contrôle (Din) met en œuvre une méthode de traitement de données de conférence, méthode mise en œuvre après la création (00) d'une conférence (Conf) à laquelle participe au moins deux terminaux de communication (T1, T2), lesquels émettent chacun au moins un flux (par exemple un flux comprenant une composante audio et une composante vidéo, ou encore un flux audio et un flux vidéo séparé ou encore un seul flux audio ou encore un seul flux vidéo). La méthode comprend au moins une itération des actions suivantes :
- obtention (10), en provenance d'un terminal de communication, d'au moins une donnée représentative d'un déroulement de conférence, dite donnée de signalisation ;
- comparaison (20) ladite au moins une donnée de signalisation reçue avec au moins un paramètre correspondant à ladite donnée de signalisation ;
- lorsque ladite au moins une donnée de signalisation reçue diffère dudit au moins un paramètre correspondant d'une valeur prédéterminée (Cond), mise en œuvre d'une phase de contrôle (comprenant éventuellement une adaptation) (30) de la conférence.

Plus particulièrement, la phase d'adaptation (30) de la conférence comprend :
- une phase de basculement (30-1) de mode de communication, pouvant comprendre le basculement d'un mode de conférence pair à pair (P2P) vers un mode de conférence centralisé (SFU) et vice-versa ; et/ou
- une phase de dimensionnement (30-2) (réduction, augmentation) du nombre de flux à transmettre lors de la conférence.

Ainsi, la technique proposée permet de résoudre la problématique de l'art antérieur consistant à améliorer la qualité de la conférence, telle que perçue par les participants, et ce sans nécessiter une interruption de celle-ci. Pour mettre en œuvre cette méthode, plusieurs possibilités sont offertes. Cependant, de manière constante, le dispositif de contrôle est présent pour une telle mise en œuvre. Le dispositif de contrôle peut se matérialiser sous la forme d'un serveur, matériel et/ou logiciel, dédié ou non, connecté aux terminaux de communication au travers d'un réseau. Le dispositif de contrôle peut également se présenter sous la forme d'un terminal de communication « maitre » en charge de la gestion de la conférence pour l'ensemble des terminaux de communication « esclaves » qui y participent. Dans au moins un mode de réalisation, la phase de basculement (30-1) de mode de communication, pouvant comprendre le basculement d'un mode de conférence P2P vers un mode de conférence SFU et vice-versa est au moins partiellement mise en œuvre par un dispositif SFU, en charge de la gestion centralisée des flux lors d'une conférence en mode SFU. Le dispositif SFU peut se matérialiser sous la forme d'un serveur, matériel et/ou logiciel, dédié ou non, connecté aux terminaux de communication au travers d'un réseau. Le dispositif SFU peut également se présenter sous la forme d'un terminal de communication « maitre » en charge de la gestion de la conférence pour l'ensemble des terminaux de communication « esclaves » qui y participent, le terminal « maitre » faisant office de dispositif SFU pouvant ou non être identique au terminal « maitre » faisant office de dispositif de contrôle. La phase de basculement d'un mode de conférence donné à un autre mode de conférence comprend, en cours de conférence, la transmission de requête de changement de mode de conférence transmises par le dispositif de contrôle aux terminaux participants à la conférence, ainsi que des requêtes de fermeture de flux et réémission. Afin de conserver une certaine fluidité dans les échanges, lors de la transition entre deux modes de conférence, les requêtes sont transmises de manière asynchrone : la procédure de désabonnement (désinscription) est immédiatement suivie d'une procédure d'inscription aux nouveaux flux émis. Dans un autre mode de réalisation, Il est prévu de ne remplacer les anciens flux que lorsque les nouveaux sont reçus, et dès lors de ne procéder à la désinscription que lorsque l'inscription est effectivement réalisée, afin de limiter les coupures. De même, la procédure d'arrêt de diffusion d'un flux de la part d'un terminal de communication est immédiatement suivie d'une procédure de construction d'un nouveau flux. Dans certains modes de réalisation, il n'est pas obligatoire de couper les flux : le terminal de communication peut ne pas couper pas le flux à la source (il n'y a alors pas d'interruption de flux de la part du terminal) : de son point de vue, il n'y a qu'une « renumérotation » de flux et un changement éventuel de destinataire de celui-ci (lorsqu'un tel destinataire est identifié). On note que, selon l'invention, la connexion « media-relay » (i.e. la conférence) qui permet de transmettre l'information *via* le serveur SFU est supprimée en cas de bascule en mode P2P. On ne conserve pas de connexion dormante, notamment pour éviter des problématiques de retour en mode centralisé à partir d'une session existante, qui bien que théoriquement plus rapide, est alors plus complexe à gérer, notamment lorsque le nombre de participants à évolué (nouveaux participants et participants ayant quitté la conférence).

Pour mettre en œuvre la technique décrite, dans au moins un mode de réalisation, on utilise également une application locale qui s'exécute sur le terminal de communication. Plus particulièrement dans un mode de réalisation, tel que celui qui est décrit par la suite, on utilise une application javascript qui est exécutée au sein d'un navigateur (logiciel de navigation sur l'Internet) s'exécutant sur le terminal de communication. L'avantage de ce type de mise en œuvre est que l'utilisateur n'a aucune démarche spécifique à réaliser : l'application javascript est téléchargée dans le navigateur lorsque l'utilisateur connecte son terminal de communication au dispositif de contrôle (soit serveur, soit autre terminal de communication) et qu'il effectue les étapes pour entrer en conférence (connexion, saisie de login/mot de passe, saisie ou sélection d'une conférence parmi la pluralité de conférence, etc.). Dans au moins un mode de réalisation, un dispositif serveur d'orchestration (qui peut être identique ou différent du dispositif de contrôle) est en charge de la gestion de ces étapes d'inscriptions aux conférences. Ce dispositif serveur d'orchestration est en mesure d'orchestrer la mise en œuvre des conférences, de gérer les enregistrements des participants (enregistrements obligatoires ou non, association utilisateurs/conférences, salons de conversations, etc.). Dans un mode de réalisation particulier, le dispositif serveur d'orchestration est en mesure de sélectionner, parmi les terminaux participants à une conférence donnée, un terminal « maitre » qui jouera éventuellement le rôle de dispositif de contrôle et/ou de dispositif SFU, dans certains modes de réalisation. Dans ce cas, la manière la plus simple de réaliser cette opération est de sélectionner le premier terminal qui rejoint une conférence. Une autre manière simple peut également être d'assigner cette tâche à l'organisateur de la conférence (i.e. le terminal de communication de l'utilisateur qui organise la conférence). Pour ce faire, en sus de l'application (du module) javascript « client de conférence », le terminal de communication « maitre » télécharge l'application (le module) javascript « serveur de contrôle » et/ou télécharge l'application (le module) javascript « serveur SFU ». Cette solution de distribution (de rôles) présente de nombreux avantages, parmi lesquels :
- la réduction des coûts d'infrastructure : en se basant sur les terminaux de communication des utilisateurs, le seul serveur centralisé qui est utilisé est celui d'orchestration ;
- les conférences peuvent avoir lieu directement entre les utilisateurs, avec un ou deux maitres (en fonction du type de conférence et de la distribution des rôles) et des esclaves : on a une résilience aux pannes car même en cas de défaillance d'un maitre, cela n'impacte pas les autres conférences qui peuvent se tenir en même temps (simultanément), avec d'autres terminaux de communication.

A l'inverse, une mise en œuvre centralisée, basée sur un ou deux serveurs physiques et/ou logiciels (un dispositif de contrôle et un dispositif SFU) présente les avantages suivants :
- meilleure organisation en fonction des conditions générales de transmission de données au sein du ou des réseaux de communication ;
- possibilité de gérer des conférences impliquant plusieurs utilisateurs qui se connectent à plusieurs conférences simultanément ;
- une vue centralisée pour optimiser la prise de décision de basculement d'un mode à l'autre.
- Brièvement, la signalisation comprend :
- joinSession(roomld, userld) qui permet à une conférence particulière (roomld) avec son identifiant (userld),
- publish() / publishAccepted() pour publier son flux. Ces messages permettent un échange de messages SDP (description des capacités multimédia du terminal ou du SFU),
- subscribe()/subscribeAccepted() pour souscrire au flux d'autre participant. Ces messages permettent également un échange de messages SDP (description des capacités multimédia du terminal ou du SFU).

Selon l'invention, on débute une conférence en mode P2P et on bascule en mode centralisé (i.e. « média server ») si l'état de la conférence change (nombre de participants, pb de qualité réseau). Le changement du mode P2P à SFU n'est pas systématique et il est déclenché :
a. À partir d'un nombre de participants configurable (ex. 4 participants par défaut) ;
b. Sur détection de dégradation de la QoS des flux médias ;
c. Sur une décision d'un serveur central (éventuellement demandée par les terminaux lorsque les mesures de qualité effectuées par ceux-ci dénotent par exemple une dégradation de la qualité de transmission).

On précise par ailleurs, pour être complet, que d'une manière générale, l'utilisation d'un composant ou d'une connexion de type « média relay » peut être nécessaire et ce quel que soit le type de conférence mis en œuvre (P2P ou SFU). À titre liminaire, on précise qu'un « média relay » n'est pas un serveur de média (serveur de conférence ou SFU). En effet, un « média relay » est utilisé en cas de d'un ou de plusieurs terminaux se situant derrière un NAT (de l'anglais pour « network address translation ») ou derrière un firewall lorsque par exemple seuls les flux UDP sont autorisés. Le 'media-relay' permet dans ce cas la traversée des NAT et des firewalls et n'a pas rapport avec la fonctionnalité des serveurs de média en tant que tels. Selon l'invention, le fait d'utiliser un « média relay » n'implique pas un basculement en mode centralisé. Les modes de conférence proposés dans le cadre de l'invention ne sont pas dépendants de l'architecture réseau mise en œuvre.

On présente dans les parties suivantes, une mise en œuvre de la technique décrite à un système centralisé, dans lequel un dispositif de contrôle de type serveur et un dispositif SFU de type serveur sont mis en œuvre pour la gestion en temps réel d'une conférence et le basculement, en temps réel d'une mode de conférence P2P à un mode de conférence SFU et vice versa, dans le cadre d'une application WebRTC, comprenant le téléchargement, au sein des terminaux de communication, par l'intermédiaire de leur navigateur (web), d'une application de conférence, fournie lors de la connexion à la conférence par le dispositif serveur d'orchestration. Il est entendu que le mode de réalisation proposé n'est nullement limitatif en termes d'architecture notamment et qu'il peut être adapté pour produire des effets similaires ou identiques dans d'autres architectures, notamment celles présentées précédemment.

### 5.2. Description d'un mode de réalisation

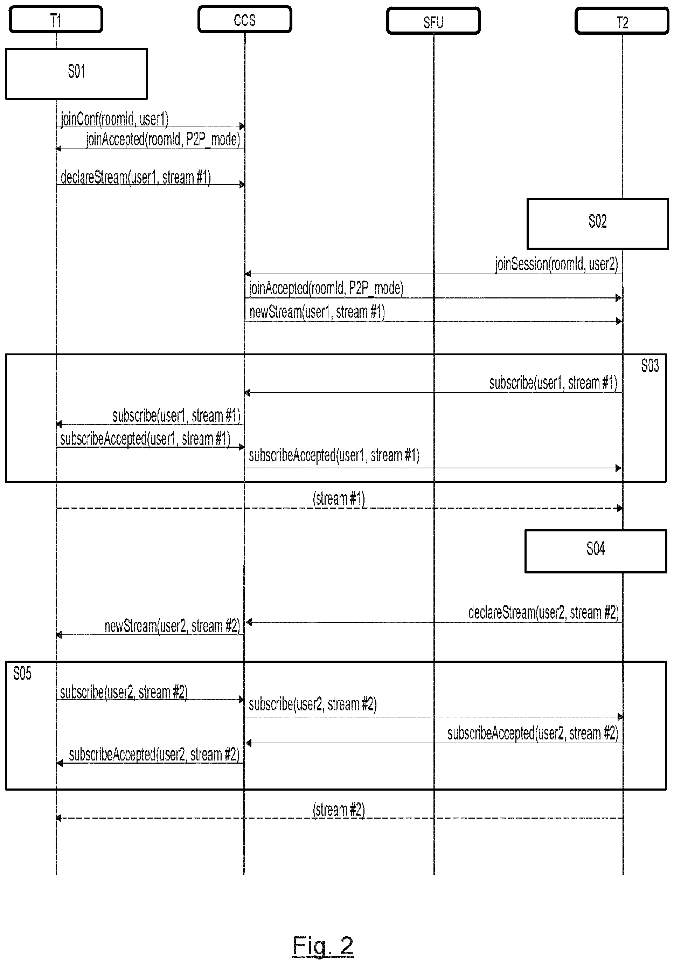

Dans ce qui suit, en relation avec les figures 2, 3 et 4, des noms de fonctions sont utilisées sur les figures pour indiquer les actions mises en œuvre. Ces noms de fonction sont un exemple d'implémentation et certaines de ces fonctions peuvent être mutualisées. Par ailleurs, ces noms de fonction ne doivent pas être considérés comme des mots écrits dans une langue étrangère et ne nécessitent pas de traduction. Sur les figures, les flux multimédias sont numérotés sous la forme « stream #... ».

### 5.2.1. Création d'une conférence en mode P2P

La figure 2 décrit la création d'une conférence en mode pair à pair.

On décrit, en relation avec la figure 2, les différentes étapes conduisant à la création d'une conférence comprenant deux utilisateurs. D'une manière générale, cette création est effectuée à l'aide du dispositif de contrôle (CCS) tel que précédemment décrit. D'une manière générale également, lorsqu'un utilisateur rejoint une conférence, il publie son flux vidéo et s'abonne aux flux vidéo des autres membres. Les flux vidéo sont en général unidirectionnels. Dans une conférence P2P, les flux multimédias sont échangés directement de bout en bout, c.-à-d. de navigateur à navigateur, sans transiter par le Serveur de Média (SFU). Le participant 1 est le premier à rejoindre la conférence. La création de la conférence s'effectue de la manière suivante :
- un premier terminal de communication informe le dispositif de contrôle qu'il souhaite rejoindre une conférence ;
- le dispositif de contrôle accepte la requête du premier terminal de communication et l'en informe (il fournit les données (paramètres et valeurs) nécessaires dans sa réponse) ;
- le premier terminal de communication déclare alors son ou ses flux auprès du dispositif de contrôle (à l'aide des données reçues du dispositif de contrôle) en fournissant lui-même ses propres données nécessaires à la prise en compte de son ou de ses flux ;
- postérieurement ou concomitamment, un deuxième terminal de communication informe le dispositif de contrôle qu'il souhaite rejoindre la conférence (le participant 2 rejoint la conférence S02) ;
- le dispositif de contrôle accepte la requête du deuxième terminal de communication et l'en informe (il fournit les données (paramètres et valeurs) nécessaires dans sa réponse) ;
- le dispositif de contrôle transmet l'information d'existence du(des) flux du premier terminal de communication au deuxième terminal de communication ;
- Le participant 2 demande à recevoir le flux du participant 1 (S03) :
- le deuxième terminal de communication requiert, auprès du dispositif de contrôle, l'obtention du(des) flux du premier terminal de communication ;
- le dispositif de contrôle informe le premier terminal de communication de la requête transmise par le deuxième terminal de communication ;
- le premier terminal de communication accepte la requête du deuxième terminal de communication et en informe le dispositif de contrôle ;
- le dispositif de contrôle informe le deuxième terminal de communication de l'acceptation du premier terminal de communication ;
   o les messages subscribe() et subscribeAccepted() contiennent respectivement une offre SDP et une réponse SDP qui permettent de négocier les caractéristiques de la session média (codecs, adresses IP, port, ...).
- le(s) flux du premier terminal de communication transite(nt) alors jusqu'au deuxième terminal de communication (en direct), sans passer par le serveur de média ;
- le deuxième terminal de communication déclare ensuite son ou ses flux (S04) auprès du dispositif de contrôle (à l'aide des données reçues du dispositif de contrôle) en fournissant lui-même ses propres données nécessaires à la prise en compte de son ou de ses flux ;
- le dispositif de contrôle transmet l'information d'existence du(des) flux du deuxième terminal de communication au premier terminal de communication ;
- Le participant 1 demande à recevoir le flux du participant 2 (S05)
- le premier terminal de communication requiert, auprès du dispositif de contrôle, l'obtention du(des) flux du deuxième terminal de communication ;
- le dispositif de contrôle informe le deuxième terminal de communication de la requête transmise par le premier terminal de communication ;
- le deuxième terminal de communication accepte la requête du premier terminal de communication et en informe le dispositif de contrôle ;
- le dispositif de contrôle informe le premier terminal de communication de l'acceptation du deuxième terminal de communication ;
- le(s) flux du deuxième terminal de communication transite(nt) alors jusqu'au premier terminal de communication (en direct), sans passer par le serveur de média ;

À l'issue de ces étapes, les deux terminaux de communication communiquent directement l'un avec l'autre et la conférence est mise en œuvre selon les données de connexion échangées précédemment par l'intermédiaire du dispositif de contrôle. Lorsqu'un autre terminal de communication souhaite joindre la conférence, les mêmes étapes d'inscription sont mises en œuvre, à la différence que le dispositif de contrôle informe le troisième terminal de communication de l'existence de deux séries de flux existantes (et non pas d'une seule comme précédemment) et que chacun des terminaux déjà en conférence s'abonne au flux du nouveau terminal entrant. Les avantages à mettre en œuvre une telle technique sont nombreux, et notamment le fait de ne pas avoir à recourir à une entité centralisée en charge de gérer les flux des terminaux de communication (comme c'est le cas du mode SFU).

### 5.2.2. Transition du mode P2P au mode SFU

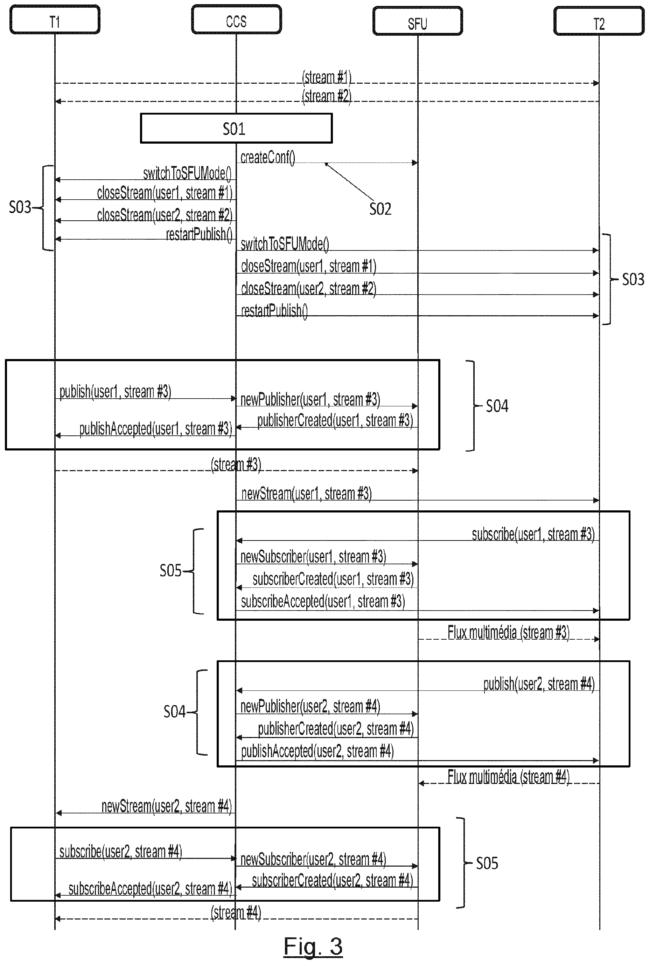

La figure 3 illustre le basculement d'une conférence en mode pair à pair vers une conférence centralisée.

On décrit, en relation avec la figure 3, les étapes mises en œuvre par le dispositif de contrôle (CCS) pour effectuer le passage d'un mode P2P à un mode SFU. Le dispositif de contrôle peut décider de basculer du mode P2P au mode SFU. Sans être exhaustive, la liste des critères, paramètres ou valeurs déclenchant le passage en mode SFU sont :
- un nombre de participants (lorsqu'il dépasse un certain seuil),
- un échec de l'établissement d'un flux média (ex. par manque de débit sur le réseau, de bande passante disponible),
- un taux de perte de paquets trop important sur l'un des flux,
- une activation d'une fonctionnalité nécessitant le mode SFU (par exemple, l'ajout d'un appel téléphonique classique, la mise en place du mixage audio, l'activation de l'enregistrement des communications, streaming),
- une activation explicite du mode SFU par un des terminaux de communication (partie à la conférence),
- la non-compatibilité du mode P2P par l'un des terminaux de communication (certains anciens navigateurs tels Internet Explorer nécessitent un plug-in propriétaire pour supporter WebRTC. Ces derniers ne supportent pas toujours le mode P2P).

Quoi qu'il en soit, en fonction des données qu'il obtient de la part des terminaux de communication d'une part (utilisation d'une signalisation de transmission telle que décrite préalablement) ou d'autre sources de données (en provenance d'équipement réseaux particuliers ou d'agents réseaux particuliers), le dispositif de contrôle met en œuvre un changement de mode de conférence. Dans le mode SFU, les flux multimédias des terminaux de communication sont publiés vers le SFU et ce dernier a la charge de diffuser un ou plusieurs flux, en fonction des modes de mise en œuvre, aux autres participants. Le SFU est donc en coupure des flux des terminaux de communications. Dans un mode de réalisation, le dispositif SFU réplique et diffuse à l'identique les flux des différents terminaux de communication, en fonction des besoins et transmet un ou plusieurs flux à destination des terminaux de communication. Dans un autre mode de réalisation, les flux peuvent être transmis individuellement par le SFU, sur abonnement du terminal de communication, comme cela est explicité ici. À l'initialisation, les flux stream #1 et stream #2 sont déjà échangés entre les terminaux T1 et T2.

La mise en œuvre du passage du mode P2P au mode SFU comprend, en phase initiale, une décision prise par le dispositif de contrôle en fonction des données à sa disposition (S01). Elle comprend ensuite quatre phases :
- une phase d'initiation du mode SFU auprès du dispositif SFU (S02 - createConf) ;
- une phase d'arrêt du mode P2P, auprès de chaque terminal de communication (S03), comprenant, pour un terminal donné :
- une transmission d'une requête de passage en mode SFU ;
- une transmission d'une requête de fermeture de flux (pour chaque flux de réception en provenance des autres terminaux et pour les flux de diffusion du terminal donné) ;
- une transmission d'une requête de redémarrage de publication (indiquant au terminal qu'il doit redémarrer la publication de ses flux) ;
- une phase d'initiation (S04) du mode SFU, auprès de chaque terminal de communication, comprenant, pour un terminal donné :
- réception, en provenance de ce terminal, d'une requête d'inscription de flux (comprenant les données nécessaires à la prise en compte de ce flux, notamment identifiant de l'utilisateur, identifiant(s) de flux, adresses de localisation éventuelles) ;
- transmission de la requête d'inscription de flux de ce terminal au dispositif SFU (comprenant éventuellement des données complémentaires ajoutées par le dispositif de contrôle) ;
- réception, en provenance du dispositif SFU de la confirmation de l'inscription (comprenant des données nécessaires à la publication vers le dispositif SFU) ;
- transmission de la confirmation au terminal de communication donnée ;

À l'issue de cette phase d'initialisation, le terminal de communication émet son ou ses flux vers le dispositif de SFU ; Cette phase comprend un échange d'offre et de réponse SDP entre le terminal et le SFU. Cela permet par exemple de négocier les codecs, les adresses IP et ports utilisés pour transmettre les flux multimédias.
- une phase d'abonnement (S05) aux flux du dispositif SFU, par chaque terminal de communication, comprenant, pour un terminal donné :
- transmission, au terminal de communication, d'une notification de mise à disposition de flux (lorsqu'un nouveau flux est mis à disposition par un autre terminal de communication de la conférence) ;
- réception, en provenance du terminal de communication, d'une requête d'abonnement (lorsque le terminal souhaite s'abonner, ce qui est supposé ici pour les besoins de la description, l'absence d'abonnement étant décrite par la suite) ;
- transmission au dispositif SFU d'une requête indiquant que le terminal de communication souhaite s'abonner au flux ;
- réception, en provenance du dispositif SFU, d'une confirmation d'abonnement, comprenant les données nécessaires à l'abonnement ; et
- transmission de la confirmation d'abonnement au terminal de communication.

À l'issue de cette phase d'abonnement le terminal de communication reçoit le(s) flux auquel(s) il s'est abonné, ce(s) flux étant transmis en provenance du dispositif SFU, vers le terminal de communication.

Ces différentes phases permettent le basculement du mode P2P au mode SFU. En cas d'absence d'abonnement à un flux d'un terminal (par exemple parce que l'utilisateur du terminal en question ne souhaite pas suivre les interventions de l'utilisateur de l'autre terminal, cas par exemple possible dans le cas d'une conférence de type salle de classe), le dispositif SFU ne transmet pas le ou les flux de ce terminal de communication et l'affichage correspondant à l'utilisateur de ce terminal de communication peut être supprimé ou remplacé par une icône ou une image fixe (tout en autorisant l'abonnement au flux audio en provenance de ce terminal de communication).

### 5.2.3. Transition du mode SFU au mode P2P

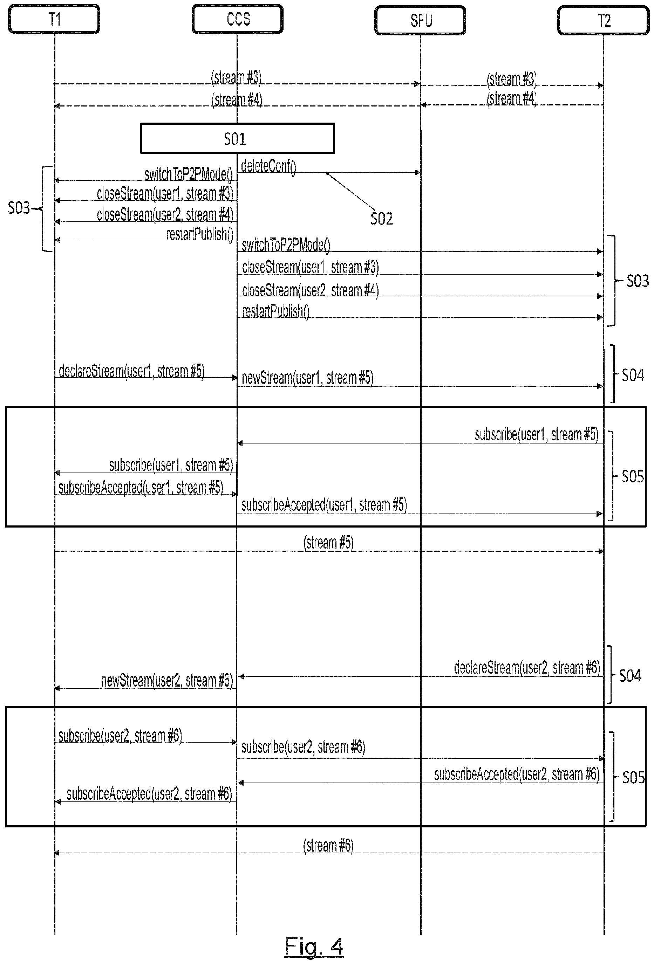

La figure 4 illustre le basculement d'une conférence en mode centralisée vers une conférence en mode pair à pair.

On décrit, en relation avec la figure 4, les étapes mises en œuvre par le dispositif de contrôle pour effectuer le passage d'un mode SFU à un mode P2P. Le dispositif de contrôle peut décider de basculer du mode SFU au mode P2P, en utilisant les mêmes critères listés précédemment. Par exemple, la réduction du nombre de participants est un critère pour repasser en mode P2P. L'amélioration de la bande passante disponible est également un critère pouvant justifier de repasser en mode P2P.

La mise en œuvre du passage du mode SFU au mode P2P comprend, en phase initiale, une décision (S01) prise par le dispositif de contrôle (CCS) en fonction des données à sa disposition. Elle comprend ensuite quatre phases :
- une phase de terminaison (S02) du mode SFU auprès du dispositif SFU ;
- une phase d'arrêt du mode SFU, (S03) auprès de chaque terminal de communication, comprenant, pour un terminal donné :
- une transmission d'une requête de passage en mode P2P ;
- une transmission d'une requête de fermeture de flux (pour chaque flux de réception en provenance des autres terminaux et pour les flux de diffusion du terminal donné) ;
- une transmission d'une requête de redémarrage de publication (indiquant au terminal qu'il doit redémarrer la production de ses flux) ;
- pour chaque terminal, une phase de création de flux en mode P2P (S04) et une phase d'abonnement (S05) aux flux des autres terminaux de communication, tels que décrits précédemment, en lien avec la création de la conférence en mode P2P.

### 5.3. Suppression du flux vidéo

Lorsqu'un participant décide de couper son micro, cela suppose qu'il souhaite être moins actif dans la conférence. Il est alors considéré comme passif et le terminal de communication effectue une coupure du flux vidéo correspondant. Au préalable, le dispositif terminal de communication capture une photo du participant à l'aide de la caméra du terminal de communication, puis il indique ensuite au CCS que les flux audio/vidéo ne sont plus publiés. Ce dernier va alors désabonner les autres participants et leur transmettre la photo (reçu depuis le terminal de communication) qui remplace le flux vidéo de l'utilisateur.

Afin de mettre en avant les participants actifs, le terminal de communication divise par exemple l'écran en deux zones :
- la première qui est la zone principale et contient les vidéos actives (des participants actifs de la conférence) ;
- la seconde, située en marge, et contenant la photo des participants ayant activé le mode Muet (spectateurs).

La zone supérieure contient les vidéos des participants ayant le micro activé. La zone inférieure contient la photo des utilisateurs ayant coupé leur micro. La réactivation du son et donc du flux vidéo aura pour conséquence de déplacer un participant de la zone photo à la zone vidéo.

Astucieusement, la suppression du flux vidéo peut également être mise en œuvre de façon automatique par le dispositif de contrôle lui-même qui peut commander la suppression de ce flux et le remplacement par une image fixe, dans au moins deux situations :
- le dispositif de contrôle ne détecte pas de changements significatifs sur le flux audio (sur l'activité vocale par exemple : absence ou présence d'une activité vocale, augmentation ou baisse du niveau sonore, utilisation de la VAD du navigateur) en provenance d'un terminal de communication ; auquel cas, passée une période d'inactivité paramétrable :
   o le dispositif de contrôle requiert la suppression de ce flux vidéo auprès du terminal de communication (en mode P2P) ; ou
   o le dispositif de contrôle se contente de ne plus transmettre le(s) flux en provenance du terminal de communication (sans requérir de modification auprès de celui-ci) aux autres terminaux de communication (en mode SFU), l'avantage étant ici que lorsque l'utilisateur redevient actif, il est alors immédiatement réactivé, sans latence, car ses flux n'ont pas été supprimés ;
   o l'utilisateur correspondant est basculé dans la catégorie « spectateurs ».
- le dispositif de contrôle ne détecte pas de changements significatifs sur le flux audio et/ou sur le flux vidéo en provenance d'un terminal de communication ; les mêmes possibilités que précédemment sont alors offertes.

### 5.4. Autres caractéristiques et avantages

### 5.4.1. Transition P2P SFU

Dans la technique précédemment exposée on effectue une coupure des flux P2P avant d'établir les flux SFU. Cette manière de procéder, bien qu'elle soit automatique, peut engendre une perception relativement déceptive de la part des utilisateurs. En effet, dans la mesure où les flux P2P sont coupés, il résulte l'apparition d'artefacts visuels dans le champ de vision de l'utilisateur. Cette perception d'artefact n'est généralement pas bien perçue par les utilisateurs. Bien que la technique de coupure P2P et de souscription SFU (ou l'inverse) est automatiquement mise en œuvre par le dispositif de contrôle (celui-ci est le seul en mesure de modifier le comportement des terminaux de communication des utilisateurs), il n'en reste pas moins que la transition peut, dans des circonstances particulières (congestion réseau par exemple), aboutir à une impression de coupure synonyme d'absence de fonctionnement. En conséquence de quoi, il est utile de disposer de solution permettant, le cas d'échéant de réduire ou supprimer cet effet déceptif.

Une première solution consiste en l'inversion des étapes de mise en œuvre de la modification des flux. Ainsi, dans cette première solution, on active la publication des flux vers le SFU tout en maintenant le mode P2P ; lorsque cette activation est effectuée, on invite chaque terminal de communication participant à souscrire au SFU ; puis on effectue une coupure des souscriptions P2P (le dispositif de contrôle transmet les instructions de coupure aux différents terminaux de communication ; pour encore réduire la coupure, il est possible de laisser le récepteur désactiver le flux P2P une fois qu'il reçoit le flux SFU). Ce mode permet une transition visuelle plus fluide et donc réduit la déceptivité de la perception. Éventuellement, comme dans la première technique de transition P2P/SFU, la transition effectuée dans ce mode peut être précédée d'un affichage d'un message à destination des utilisateurs afin de les informer d'un changement de mode.

Une deuxième solution, dite asynchrone, consiste en une mise en œuvre différenciée de la première solution. Dans cette solution, le dispositif de contrôle « s'abonne » ou capture les flux P2P en provenance de chacun des participants. Il est donc récipiendaire, au même titre que les autres participants, de tous les flux provenant de l'ensemble des participants. Cependant, à la différence du passage P2P/SFU tel que précédemment décrit (5.2.2), il ne requiert pas, de la part de tous les participants, la fermeture de leurs flux P2P avant le début de la mise en œuvre SFU. Au contraire, il effectue cette fermeture participant par participant : cela signifie que chacun à leur tour, les participant vont s'abonner au flux en provenance du SFU.

Ainsi, dans cette deuxième solution, on aboutit à une mise en œuvre du mode SFU plus progressive, entrainant en réduction de la perception déceptive de transition du premier mode au deuxième mode.

Une autre méthode consiste à :
- publier son flux vers le SFU sans interrompre la diffusion en mode P2P ;
- pour chaque flux P2P reçu, le terminal attend de recevoir le flux équivalent en mode SFU avant de se désabonner au flux P2P ;
- pour traiter les cas où le terminal ne reçoit pas la demande de désabonnement pour le flux qu'il émet en P2P, il supprimera tous les flux publiés en mode P2P au bout d'une durée maximale (ex. 15s).

### 5.4.2. Optimisation audio

Le principe exposé dans ce mémoire technique est également applicable pour passer d'un mode SFU à la transmission d'un flux audio composite afin d'éviter de transmettre autant de flux que de participant à chaque participant. Si le nombre de participant augmente au-delà d'un seuil, le SFU peut automatiquement transmettre un flux audio composite au lieu de transmettre les flux unitaires.

### 5.5. Dispositifs et Systèmes de mise en œuvre

La figure 5 illustre schématiquement un dispositif de contrôle selon la présente technique.

On présente, en relation avec la figure 5, une architecture simplifiée d'un dispositif de contrôle apte à mettre en œuvre la méthode de gestion de flux de communication tel que présenté précédemment. Un tel dispositif de contrôle comprend une mémoire 51, une unité de traitement 52 équipée par exemple d'un microprocesseur, et pilotée par le programme d'ordinateur 53, mettant en œuvre le procédé selon l'invention. Dans au moins un mode de réalisation, l'invention est mise en œuvre sous la forme d'une application installée sur un dispositif de contrôle en possession de l'utilisateur et/ou par l'intermédiaire d'une application distante chargée par le navigateur utilisé sur le dispositif de contrôle. Un tel dispositif de contrôle comprend :
- des moyens d'obtention, en provenance de terminaux de communication (T1, T2), d'au moins une donnée représentative d'un déroulement de conférence, dite donnée de signalisation ;
- des moyens de comparaison de ladite au moins une donnée de signalisation reçue avec au moins un paramètre correspondant à ladite donnée de signalisation ;
- des moyens de contrôle de la conférence qui sont mis en œuvre lorsque ladite au moins une donnée de signalisation reçue diffère dudit au moins un paramètre correspondant d'une valeur prédéterminée (Cond).
- Les moyens de contrôle de la conférence comprennent notamment :
- des moyens de basculement de mode de communication des terminaux de communication, pouvant comprendre le basculement d'un mode de conférence en mode pair à pair (P2P) vers un mode de conférence centralisé (SFU) et vice-versa ; et/ou
- des moyens de dimensionnement du nombre de flux de la conférence (Conf).

Ces moyens sont mis en œuvre par les procédés décrits précédemment.

Ces moyens se présentent sous la forme d'une application logicielle spécifique, ou encore sous la forme de composants matériels dédiés, tel qu'un élément de sécurisation (SE) ou un environnement d'exécution sécurisé. L'élément de sécurisation peut se présenter sous la forme d'une carte Sim, USim, UICC, ou encore un composant de sécurité spécifique, greffé sur la carte mère du dispositif de contrôle. Plus particulièrement, dans au moins un mode de réalisation, ces moyens se présentent sous la forme de plusieurs composants matériels auxquels sont adjoint plusieurs composants logiciels.

## Revendications

1. Procédé de contrôle d'une conférence de type visioconférence ou audioconférence, procédé mis en œuvre après la création (00) d'une conférence (Conf) à laquelle participe un ensemble d'au moins deux terminaux de communication (T1, T2), lesquels émettent chacun au moins un flux en provenance d'un périphérique de création de flux, **caractérisé en ce que** le procédé est mis en œuvre par un dispositif électronique de contrôle, et dans lequel la création de la conférence entre l'ensemble des au moins deux terminaux de communication (T1, T2) est effectuée en mode de pair à pair, et dans lequel le procédé comprend au moins une itération des actions suivantes :
- obtention (10), en provenance d'un desdits au moins deux terminaux de communication (T1, T2), d'au moins une donnée représentative d'un déroulement de conférence, dite donnée de signalisation ;
- comparaison (20) ladite au moins une donnée de signalisation reçue avec au moins un paramètre correspondant à ladite donnée de signalisation, le paramètre appartenant au groupe comprenant :
- un nombre configurable de participants ;
- une détection de dégradation de la QoS des flux médias ;
- une décision d'un serveur central ;
- lorsque ladite au moins une donnée de signalisation reçue diffère dudit au moins un paramètre correspondant d'une valeur prédéterminée (Cond), mise en œuvre d'une phase de contrôle (30) de la conférence qui comprend :
- une phase de basculement (30-1) de mode de communication des terminaux de communication, pouvant comprendre le basculement d'un mode de conférence en mode pair à pair (P2P) vers un mode de conférence centralisé (SFU) et vice-versa ; et/ou
- une phase de dimensionnement (30-2) du nombre de flux de la conférence (Conf).

2. Procédé de contrôle selon la revendication 1, **caractérisé en ce que** la phase de basculement (30-1) de mode de communication des terminaux de communication d'un mode de conférence en mode pair à pair (P2P) vers un mode de conférence centralisé (SFU) comprend :
- une transmission d'une requête de création d'une conférence centralisée (SFU) à un dispositif SFU ; et
pour chaque terminal (Ti) de communication appartenant à l'ensemble des terminaux de communication (T1, T2) :
- une transmission, au terminal (Ti), d'une requête de commutation de conférence, comprenant une donnée de passage en mode centralisé ;
- une transmission, au terminal (Ti), d'une requête de réémission d'un flux (Flxi) ;
- une réception, en provenance du terminal (Ti), d'une requête de publication de flux comprenant au moins un identifiant de flux et un identifiant de terminal de communication ;
- une transmission, au dispositif SFU, d'une requête de publication de flux dudit terminal (Ti) ;
- réception, en provenance du dispositif SFU, d'une confirmation de publication dudit terminal (Ti) ;
- une transmission, au terminal (Ti), d'une confirmation de publication auprès du dispositif SFU ;
- une transmission, aux autres terminaux de communication dudit ensemble des terminaux de communication (T1, T2), d'une notification de disponibilité dudit nouveau flux (Flxi).

3. Procédé de contrôle selon la revendication 1, **caractérisé en ce que** la phase de basculement (30-1) de mode de communication des terminaux de communication d'un mode de conférence en mode pair à pair (P2P) vers un mode de conférence centralisé (SFU) comprend en outre pour chaque terminal (Ti) de communication appartenant à l'ensemble des terminaux de communication (T1, T2) :
- une réception, en provenance du terminal (Ti), d'une requête d'abonnement à un nouveau flux (Flxj) émis à la suite de la commutation par un autre terminal de communication (Tj) dudit ensemble des terminaux de communication (T1, T2);
- une transmission, au dispositif SFU, d'une requête d'abonnement de flux dudit terminal (Ti) ;
- une réception, en provenance du dispositif SFU, d'une confirmation d'abonnement dudit terminal (Ti) au flux (Flxj) ;
- une transmission, au terminal (Ti), d'une confirmation d'abonnement auprès du dispositif SFU ;

4. Procédé de contrôle selon la revendication 1, **caractérisé en ce que** la phase de basculement (30-1) de mode de communication des terminaux de communication d'un mode de conférence centralisé (SFU) vers un mode de conférence en mode pair à pair (P2P) comprend :
- une transmission d'une requête de suppression d'une conférence centralisée (SFU) à un dispositif SFU ; et
pour chaque terminal (Ti) de communication appartenant à l'ensemble des terminaux de communication (T1, T2) :
- une transmission, au terminal (Ti), d'une requête de commutation de conférence, comprenant une donnée de passage en mode pair à pair ;
- une transmission, au terminal (Ti), d'une requête de déclaration d'un flux (Flxi) ;
- une réception, en provenance du terminal (Ti), d'une requête de déclaration de flux comprenant au moins un identifiant de flux et un identifiant de terminal de communication ;
- une transmission, aux autres terminaux de communication dudit ensemble des terminaux de communication (T1, T2), d'une notification de disponibilité dudit nouveau flux (Flxi).

5. Procédé de contrôle selon la revendication 1, **caractérisé en ce que** la phase de basculement (30-1) de mode de communication des terminaux de communication d'un mode de conférence centralisé (SFU) vers un mode de conférence en mode pair à pair (P2P) comprend pour chaque terminal de communication (Ti) appartenant à l'ensemble des terminaux de communication (T1, T2) :
- une réception, en provenance du terminal de communication (Ti), d'une requête d'abonnement à un nouveau flux (Flxj) émis à la suite de la commutation par un premier terminal de communication (Tj) dudit ensemble des terminaux de communication (T1, T2) ;
- une transmission, au premier terminal de communication (Tj), d'une requête d'abonnement indiquant l'abonnement du terminal de communication (Ti) ;
- une réception, en provenance du premier terminal de communication (Tj), d'une confirmation d'abonnement dudit terminal (Ti) au nouveau flux (Flxj) ;
- une transmission, au terminal (Ti), d'une confirmation d'abonnement auprès du premier terminal de communication (Tj) ;

6. Procédé de contrôle selon la revendication 1, **caractérisé en ce que** la phase de dimensionnement (30-2) du nombre de flux de la conférence comprend les étapes suivantes :
- obtention d'une donnée représentative d'une absence d'activité d'un utilisateur d'un terminal de communication (Ti) appartenant à l'ensemble des terminaux de communication (T1, T2) ;
- transmission, aux autres terminaux de à l'ensemble des terminaux de communication (T1, T2), d'une donnée représentative de l'absence d'activité de l'utilisateur terminal de communication (Ti) ;
- suppression d'au moins un flux dudit terminal de communication (Ti).

7. Dispositif électronique de contrôle d'une conférence (conf) de type visioconférence ou audioconférence, dispositif contrôle mis en œuvre après la création (00) de la conférence (Conf) à laquelle participe un ensemble d'au moins deux terminaux de communication (T1, T2), lesquels émettent chacun au moins un flux en provenance d'un périphérique de création de flux, et dans lequel la création de la conférence entre l'ensemble des au moins deux terminaux de communication (T1, T2) est effectuée en mode de pair à pair, et dans lequel le Dispositif électronique de contrôle met en œuvre itérativement les moyens suivants :
- obtention (10), en provenance d'un terminal de communication (T1, T2), d'au moins une donnée représentative d'un déroulement de conférence, dite donnée de signalisation ;
- comparaison (20) ladite au moins une donnée de signalisation reçue avec au moins un paramètre correspondant à ladite donnée de signalisation, le paramètre appartenant au groupe comprenant :
- un nombre configurable de participants ;
- une détection de dégradation de la QoS des flux médias ;
- une décision d'un serveur central ;
- lorsque ladite au moins une donnée de signalisation reçue diffère dudit au moins un paramètre correspondant d'une valeur prédéterminée (Cond), mise en œuvre de moyens de contrôle (30) de la conférence qui comprennent :
- des moyens de basculement (30-1) de mode de communication des terminaux de communication, pouvant comprendre le basculement d'un mode de conférence en mode pair à pair (P2P) vers un mode de conférence centralisé (SFU) et vice-versa ; et
- des moyens de dimensionnement (30-2) du nombre de flux de la conférence (Conf).

8. Système de contrôle d'une conférence (conf) de type visioconférence ou audioconférence **caractérisé en ce qu'**il comprend :
- au moins deux terminaux de communication (T1, T2), lesquels sont aptes à émettre chacun au moins un flux en provenance d'un périphérique de création de flux ;
- au moins un dispositif SFU de centralisation de flux ;
- au moins un dispositif de contrôle *selon la revendication 7*;
- au moins un serveur de gestion de conférence.

9. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé selon la revendication 1, lorsqu'il est exécuté sur un ordinateur.

## Patentansprüche

1. Steuerungsverfahren einer Konferenz vom Typ Videokonferenz oder Audiokonferenz, das nach dem Aufbau (00) einer Konferenz (Conf) implementiert wird, an der ein Satz von mindestens zwei Kommunikationsterminals (T1, T2) teilnimmt, von denen jedes mindestens einen Datenstrom, ausgehend von einer Datenstromerzeugungsvorrichtung, überträgt, **dadurch gekennzeichnet, dass** das Verfahren durch eine elektronische Steuerungsvorrichtung implementiert wird, und wobei die Erzeugung der Konferenz zwischen dem Satz von mindestens zwei Kommunikationsterminals (T1, T2) im Peer-to-Peer-Modus durchgeführt wird, und bei dem das Verfahren mindestens eine Iteration der folgenden Schritte umfasst:
- Erhalten (10), ausgehend von einem der mindestens zwei Kommunikationsterminals (T1, T2), mindestens eines Datenwertes, der für einen Konferenzverlauf repräsentativ ist, genannt Signalisierungsdatenwert;
- Vergleichen (20) des mindestens einen empfangenen Signalisierungsdatenwertes mit mindestens einem dem Signalisierungsdatenwert entsprechenden Parameter, wobei der Parameter zu der Gruppe gehört, die umfasst:
- eine konfigurierbare Anzahl von Teilnehmern;
- eine Erkennung einer QoS-Verschlechterung von Mediendatenströmen;
- eine Entscheidung eines zentralen Servers;
- wenn sich der mindestens eine empfangene Signalisierungsdatenwert von dem mindestens einen entsprechenden Parameter um einen vorbestimmten Wert (Cond) unterscheidet, Implementieren einer Konferenzsteuerungsphase (30), die umfasst:
- eine Kommunikationsmodus-Umschaltphase (30-1) der Kommunikationsterminals, die das Umschalten von einem Peer-to-Peer (P2P)-Konferenzmodus zu einem zentralisierten Konferenzmodus (SFU) und umgekehrt umfassen kann;
und/oder
- eine Dimensionierungsphase (30-2) der Anzahl der Datenströme der Konferenz (Conf).

2. Steuerungsverfahren nach Anspruch 1, **dadurch gekennzeichnet, dass** die Kommunikationsmodus-Umschaltphase (30-1) der Kommunikationsterminals von einem Peer-to-Peer (P2P)-Konferenzmodus zu einem zentralisierten Konferenzmodus (SFU) umfasst:
- eine Übertragung einer Anforderung zum Erstellen einer zentralisierten Konferenz (SFU) an eine SFU-Vorrichtung; und
für jedes Kommunikationsterminal (Ti), das zu dem Satz der Kommunikationsterminals (T1, T2) gehört:
- eine Übertragung einer Konferenzumschaltungsanforderung an das Terminal (Ti), die einen Datenwert zum Umschalten in den zentralisierten Modus umfasst;
- eine Übertragung einer Anforderung zur erneuten Übertragung eines Datenstroms (Flxi) an das Terminal (Ti);
- einen Empfang einer Datenstromveröffentlichungsanforderung, ausgehend vom Terminal (Ti), die mindestens einen Datenstromidentifikator und einen Kommunikationsterminalidentifikator umfasst;
- eine Übertragung einer Datenstromveröffentlichungsanforderung des Terminals (Ti) an die SFU-Vorrichtung;
- Empfang, ausgehend von der SFU-Vorrichtung, einer Bestätigung der Veröffentlichung des Terminals (Ti);
- eine Übertragung einer Bestätigung der Veröffentlichung bei der SFU-Vorrichtung, an das Terminal (Ti);
- eine Übertragung einer Meldung der Verfügbarkeit des neuen Datenstroms (Flxi) an die anderen Kommunikationsterminals des Satzes von Kommunikationsterminals (T1, T2).

3. Steuerungsverfahren nach Anspruch 1, **dadurch gekennzeichnet, dass** die Kommunikationsmodus-Umschaltphase (30-1) der Kommunikationsterminals von einem Peer-to-Peer-(P2P)-Konferenzmodus in einen zentralisierten Konferenzmodus (SFU) für jedes Kommunikationsterminal (Ti) das zu dem Satz von Kommunikationsterminals (T1, T2) gehört, ferner umfasst:
- einen Empfang, ausgehend von dem Terminal (Ti), einer Abonnementanforderung für einen neuen Datenstrom (Flxj), der nach der Umschaltung von einem anderen Kommunikationsterminal (Tj) des Satzes von Kommunikationsterminals (T1, T2) übertragen wird;
- eine Übertragung einer Datenstromabonnementanforderung von dem Terminal (Ti) an die SFU-Vorrichtung;
- einen Empfang, ausgehend von der SFU-Vorrichtung, einer Bestätigung des Abonnements des Terminals (Ti) an den Datenstrom (Flxj);
- eine Übertragung, einer Bestätigung des Abonnements bei der SFU-Vorrichtung, an das Terminal (Ti);

4. Steuerungsverfahren nach Anspruch 1, **dadurch gekennzeichnet, dass** die Kommunikationsmodus-Umschaltphase (30-1) der Kommunikationsterminals von einem zentralisierten Konferenzmodus (SFU) zu einem Peer-to-Peer (P2P) Konferenzmodus umfasst:
- eine Übertragung von einer Unterdrückungsanforderung einer zentralisierten Konferenz (SFU) an eine SFU-Vorrichtung; und
für jedes Kommunikationsterminal (Ti), das zu dem Satz der Kommunikationsterminals (T1, T2) gehört:
- eine Übertragung einer Konferenzumschaltanforderung an das Terminal (Ti), die einen Datenwert zum Umschalten in den Peer-to-Peer-Modus enthält;
- eine Übertragung einer Deklarationsanforderung eines Datenstroms (Flxi) an das Terminal (Ti);
- einen Empfang einer Deklarationsanforderung eines Datenstroms vom Terminal (Ti), die mindestens einen Datenstromidentifikator und einen Kommunikationsterminalidentifikator umfasst;
- Übertragung einer Meldung über die Verfügbarkeit des neuen Datenstroms (Flxi) an die anderen Kommunikationsterminals des Satzes von Kommunikationsterminals (T1, T2).

5. Steuerungsverfahren nach Anspruch 1, **dadurch gekennzeichnet, dass** die Kommunikationsmodus-Umschaltphase (30-1) der Kommunikationsterminals von einem zentralisierten Konferenzmodus (SFU) zu einem Peer-to-Peer (P2P) Konferenzmodus für jedes Kommunikationsterminal (Ti), das zu dem Satz von Kommunikationsterminals (T1, T2) gehört, umfasst:
- einen Empfang, ausgehend von dem Kommunikationsterminal (Ti), einer Abonnementanforderung für einen neuen Datenstrom (Flxj), der nach der Umschaltung durch ein erstes Kommunikationsterminal (Tj) des Satzes von Kommunikationsterminals (T1, T2) übertragen wird;
- eine Übertragung einer Abonnementanforderung, die das Abonnement des Kommunikationsterminals (Ti) anzeigt, an das erste Kommunikationsterminal (Tj);
- einen Empfang, ausgehend von dem ersten Kommunikationsterminal (Tj), einer Bestätigung des Anschlusses (Ti) an den neuen Datenstrom (Flxj);
- Übertragung einer Abonnementbestätigung vom ersten Kommunikationsterminal (Tj) an das Terminal (Ti);

6. Steuerungsverfahren nach Anspruch 1, **dadurch gekennzeichnet, dass** die Dimensionierungsphase (30-2) der Anzahl der Datenströme der Konferenz die folgenden Schritte umfasst:
- Erhalten eines Datenwertes, der für eine Abwesenheit von Aktivität eines Benutzers eines Kommunikationsterminals (Ti), das zu dem Satz von Kommunikationsterminals (T1, T2) gehört, repräsentativ ist;
- Übertragung eines Datenwertes, der für die Abwesenheit der Aktivität des Benutzers des Kommunikationsterminals (Ti) repräsentativ ist, an die anderen Terminals des Satzes von Kommunikationsterminals (T1, T2);
- Löschen mindestens eines Datenstroms von dem Kommunikationsterminal (Ti).

7. Elektronische Steuerungsvorrichtung einer Konferenz (Conf) vom Typ Videokonferenz oder Audiokonferenz, wobei die elektronische Steuerungsvorrichtung nach dem Aufbau (00) der Konferenz (Conf) implementiert wird, an der ein Satz von mindestens zwei Kommunikationsterminals (T1, T2) teilnimmt, von denen jedes mindestens einen Datenstrom von einer Datenstrom-Erzeugungsvorrichtung überträgt, und wobei der Aufbau der Konferenz zwischen dem Satz von mindestens zwei Kommunikationsterminals (T1, T2) im Peer-to-Peer-Modus durchgeführt wird, und wobei die elektronische Steuerungsvorrichtung iterativ die folgenden Mittel implementiert :
- Erhalten (10), ausgehend von einem Kommunikationsterminal (T1, T2), mindestens eines Datenwertes, der für einen Konferenzverlauf repräsentativ ist, genannt Signalisierungsdatenwert;
- Vergleichen (20) des mindestens einen empfangenen Signalisierungsdatenwertes mit mindestens einem dem Signalisierungsdatenwert entsprechenden Parameter, wobei der Parameter zu der Gruppe gehört, die umfasst:
- eine konfigurierbare Anzahl von Teilnehmern;
- eine Erkennung einer QoS-Verschlechterung von Mediendatenströmen;
- eine Entscheidung eines zentralen Servers;
- wenn sich der mindestens eine empfangene Signalisierungsdatenwert von dem mindestens einen entsprechenden Parameter um einen vorbestimmten Wert (Cond) unterscheidet, Implementieren von Konferenzsteuerungsmitteln (30), die umfassen:
- Mittel zum Umschalten (30-1) des Kommunikationsmodus der Kommunikationsterminals, was das Umschalten von einem Peer-to-Peer (P2P)-Konferenzmodus zu einem zentralisierten Konferenzmodus (SFU) und umgekehrt umfassen kann; und
- Mittel zur Dimensionierung (30-2) der Anzahl der Datenströme der Konferenz (Conf).

8. System zur Steuerung einer Konferenz (conf) vom Typ Videokonferenz oder Audiokonferenz, **dadurch gekennzeichnet, dass** es umfasst:
- mindestens zwei Kommunikationsterminals (T1, T2), von denen jedes in der Lage ist, mindestens einen Datenstrom, ausgehend von einer Datenstrom-Erzeugungsvorrichtung, zu übertragen;
- mindestens eine SFU-Vorrichtung zur Zentralisierung der Datenströme;
- mindestens eine Steuerungsvorrichtung nach Anspruch 7;
- mindestens einen Konferenzmanagement-Server.

9. Computerprogrammprodukt, das von einem Kommunikationsnetzwerk heruntergeladen werden kann und/oder auf einem computerlesbaren Medium gespeichert ist und/oder von einem Mikroprozessor ausgeführt werden kann, **dadurch gekennzeichnet, dass** es Programmcodebefehle für die Ausführung eines Verfahrens nach Anspruch 1 umfasst, wenn es auf einem Computer ausgeführt wird.

## Claims

1. Method for controlling a conference of videoconference or audioconference type, method implemented after the creation (00) of a conference (Conf) to which participates a set of at least two communication terminals (T1, T2), which each send at least one stream from a stream creation peripheral, **characterised in that** the method is implemented by an electronic control device, and wherein the creation of the conference between the set of at least two communication terminals (T1, T2) is performed in peer-to-peer mode, and wherein the method comprises at least one iteration of the following actions:
- obtaining (10), from one of said at least two communication terminals (T1, T2), at least one datum representative of a conference sequence, referred to as signalling datum;
- comparing (20) said at least one signalling datum received with at least one parameter corresponding to said signalling datum, the parameter belonging to the group comprising:
- a configurable number of participants;
- detecting degradation of the QoS of the media streams;
- a decision of a central server;
- when said at least one signalling data received differs from said at least one parameter corresponding to a predetermined value (Cond), implementation of a phase of controlling (30) the conference that comprises:
- a phase of communication mode switching (30-1) of the communication terminals, able to comprise the switching from a conference mode in peer-to-peer (P2P) mode to a centralised conference mode (SFU) and vice-versa; and/or
- a phase of dimensioning (30-2) the number of streams of the conference (Conf).

2. Control method according to claim 1, **characterised in that** the phase of communication mode switching (30-1) of the communication terminals from a conference mode in peer-to-peer (P2P) mode to a centralised conference mode (SFU) comprises:
- transmitting a request to create a centralised conference (SFU) to a SFU device; and
for each communication terminal (Ti) belonging to the set of communication terminals (T1, T2):
- transmitting, to the terminal (Ti), a conference switch request, comprising centralised mode transition data;
- transmitting, to the terminal (Ti), a request to re-send a stream (Flxi);
- receiving, from the terminal (Ti), a stream publish request comprising at least one stream identifier and one communication terminal identifier;
- transmitting, to the SFU device, a stream publish request from said terminal (Ti);
- receiving, from the SFU device, a publish confirmation from said terminal (Ti);
- transmitting, to the terminal (Ti), a publish confirmation with the SFU device;
- transmitting, to the other communication terminals of the set of communication terminals (T1, T2), a notification of availability of said new stream (Flxi).

3. Control method according to claim 1, **characterised in that** the phase of communication mode switching (30-1) of the communication terminals from a conference mode in peer-to-peer (P2P) mode to a centralised conference mode (SFU) further comprises for each communication terminal (Ti) belonging to the set of communication terminals (T1, T2):
- receiving, from the terminal (Ti), a request to subscribe to a new stream (Flxj) sent following the switch by another communication terminal (Tj) of said set of communication terminals (T1, T2);
- transmitting, to the SFU device, a stream subscribe request from said terminal (Ti);
- receiving, from the SFU device, a subscribe confirmation from said terminal (Ti) to the stream (Flxj);
- transmitting, to the terminal (Ti), a subscribe confirmation with the SFU device.

4. Control method according to claim 1, **characterised in that** the phase of communication mode switching (30-1) of the communication terminals from a centralised conference mode (SFU) to a conference mode in peer-to-peer (P2P) mode comprises:
- transmitting a request to remove a centralised conference (SFU) to a SFU device; and
for each communication terminal (Ti) belonging to the set of communication terminals (T1, T2):
- transmitting, to the terminal (Ti), a conference switch request, comprising peer-to-peer mode transition data;
- transmitting, to the terminal (Ti), a request to declare a stream (Flxi);
- receiving, from the terminal (Ti), a stream declare request comprising at least one stream identifier and one communication terminal identifier;
- transmitting, to the other communication terminals of said set of communication terminals (T1, T2), a notification of availability of said new stream (Flxi) .

5. Control method according to claim 1, **characterised in that** the phase of communication mode switching (30-1) of the communication terminals from a centralised conference mode (SFU) to a conference mode in peer-to-peer (P2P) mode comprises for each communication terminal (Ti) belonging to the set of communication terminals (T1, T2):
- receiving, from the communication terminal (Ti), a request to subscribe to a new stream (Flxj) sent following the switch by a first communication terminal (Tj) of said set of communication terminals (T1, T2);
- transmitting, to the first communication terminal (Tj), a subscribe request indicating the subscription of the communication terminal (Ti);
- receiving, from the first communication terminal (Tj), a subscribe confirmation from said terminal (Ti) to the new stream (Flxj);
- transmitting, to the terminal (Ti), a subscribe confirmation with the first communication device (Tj).

6. Control method according to claim 1, **characterised in that** the phase of dimensioning (30-2) the number of streams of the conference comprises the following steps:
- obtaining data representative of an absence of activity of a user of a communication terminal (Ti) belonging to the set of communication terminals (T1, T2);
- transmitting, to the other terminals of the set of communication terminals (T1, T2), data representative of the absence of activity of the user of the communication terminal (Ti);
- removing at least one stream from said communication terminal (Ti).

7. Electronic device for controlling a conference (conf) of videoconference or audioconference type, control device implemented after the creation (00) of the conference (Conf) to which participates a set of at least two communication terminals (T1, T2), which each send at least one stream from a stream creation peripheral, and wherein the creation of the conference between the set of at least two communication terminals (T1, T2) is performed in peer-to-peer mode, and wherein the Electronic control device iteratively implements the following means:
- obtaining (10), from a communication terminal (T1, T2), at least one datum representative of a conference sequence, referred to as signalling datum;
- comparing (20) said at least one signalling datum received with at least one parameter corresponding to said signalling datum, the parameter belonging to a group comprising:
- a configurable number of participants;
- detecting degradation of the QoS of the media streams;
- a decision of a central server;
- when said at least one signalling datum received differs from said at least one parameter corresponding to a predetermined value (Cond), implementation of means for controlling (30) the conference that comprises:
- means for communication mode switching (30-1) of the communication terminals, able to comprise the switching from a conference mode in peer-to-peer (P2P) mode to a centralised conference mode (SFU) and vice-versa; and
- means for dimensioning (30-2) the number of streams of the conference (Conf).

8. System for controlling a conference (conf) of videoconference or audioconference type **characterised in that** it comprises:
- at least two communication terminals (T1, T2), which are each capable of sending at least one stream from a stream creation peripheral;
- at least one stream centralisation device SFU;
- at least one control device *according to claim 7*;
- at least one conference management server.

9. Computer program product downloadable from a communication network and/or stored on computer-readable and/or microprocessor-executable medium, **characterised in that** it comprises program code instructions for the execution of a method according to claim 1, when executed on a computer.
